# EUROPÄISCHE PATENTSCHRIFT

(11) **EP 0 923 054 B1**
(45) Veröffentlichungstag und Bekanntmachung des Hinweises auf die Patenterteilung: **04.06.2003**
(21) Anmeldenummer: 98122611.1
(22) Anmeldetag: 27.11.1998
(51) Int. Cl.: G07C 9/00, E05B 49/00

(54) **Verfahren und Vorrichtung zur Prüfung der Nutzungsberechtigung für Zugangskontrolleinrichtungen**
Method and device for checking the usage right for access control devices
Procédé et dispositif pour vérifier le droit d'usage de dispositifs de contrôle d'accès

(30) Priorität: 10.12.1997 DE 19754710; 06.04.1998 DE 19815300
(43) Veröffentlichungstag der Anmeldung: 16.06.1999
(73) Patentinhaber: Delphi Automotive Systems Deutschland GmbH, D-42369 Wuppertal (DE)
(72) Erfinder: Petsching, Wilfried, 51702 Bergneustadt (DE); Marquart, Michael, 59192 Bergkamen (DE); Schenk, Christoph, 51688 Wipperfürth (DE); Seifert, Wolfgang, 51647 Gummersbach-Lantenbach (DE)
(74) Vertreter: Cohausz & Florack

(56) Entgegenhaltungen:
- EP-A- 0 521 547
- EP-A- 0 709 803
- EP-A- 0 739 109
- EP-A- 0 767 091
- GB-A- 2 051 442
- GB-A- 2 282 687
- US-A- 5 055 701
- SCHNEIDER C ET AL: "EIN FAHRZEUGSICHERUNGSSYSTEM OHNE MECHANISCHEN SCHLUESSEL VEHICLE SECURITY SYSTEM DISPENSING WITH MECHANICAL KEY" , ATZ AUTOMOBILTECHNISCHE ZEITSCHRIFT, VOL. 96, NR. 5, PAGE(S) 321 - 323, 330 XP000442154 ISSN: 0001-2785

## Beschreibung

Die Erfindung betrifft ein Verfahren und eine Vorrichtung zur Prüfung der Nutzungsberechtigung für Zugangskontrolleinrichtungen, insbesondere für Schließeinrichtungen von Fahrzeugen, mit Hilfe einer zugangsseitigen Steuereinrichtung und mit Hilfe mindestens einer benutzerseitigen Identifikationseinrichtung, bei welchem zwischen der Steuereinrichtung und einer Identifikationseinrichtung Autorisierungssignale ausgetauscht und verglichen werden und bei welchem die in Reichweite der Steuereinrichtung befindlichen Identifikationseinrichtungen automatisch zur Übertragung der Autorisierungssignale angesprochen werden.

Ein Verfahren bzw. eine Vorrichtung dieser Art kommt immer dann zum Einsatz, wenn es um die Überprüfung geht, ob eine bestimmte Person als Inhaber der Identifikationseinrichtung autorisiert ist, die Zugangskontrolleinrichtung zu passieren. Dies gilt sowohl für ortsfeste Zugangskontrolleinrichtungen, zu denen nur ein ausgewählter Personenkreis Zutritt hat, als auch für mobile Zugangskontrolleinrichtungen, insbesondere an Fahrzeugen, wie Kraftfahrzeugen, Schiffen oder Fahrrädern. Durch das Vorsehen von Zugangskontrolleinrichtungen soll hier dem Diebstahl des Fahrzeugs entgegengewirkt werden. Die Vorrichtung setzt sich dabei zusammen aus den beiden Grundkomponenten, zum einen der zentral angeordneten Steuereinrichtung, welche in der Regel dauerhaft mit Energie versorgt ist, und zum anderen den mobilen Identifikationseinrichtungen, die den autorisierten Benutzer identifizieren sollen. Die Identifikationseinrichtung kann dabei selbst Teil eines Fahrzeugschlüssels sein, welcher mit der Steuereinrichtung im Bereich der Schließanlage des Fahrzeuges in vorzugsweise bidirektionalem Datenaustausch steht.

Den heutigen Stand der Technik für die beschriebenen Identifikationseinrichtungen bilden sog. in Fahrzeugschlüsseln, Chipkarten oder dergleichen integrierte Transponder. Derartige Transponder weisen keine eigene Energieversorgung auf, sondern werden bei der Annäherung der Identifikationseinrichtung an die Steuereinrichtung drahtlos mit Energie versorgt und im weiteren automatisch zur Übertragung der Autorisierungssignale angesprochen.

Verfahren bzw. Vorrichtungen zur Prüfung der Nutzungsberechtigung, von denen die vorliegende Erfindung ausgeht, sind aus der Praxis im Anwendungsbereich für Fahrzeuge bekannt. Im einfachsten Fall handelt es sich um ein elektromagnetisches Identifizierungssystem bestehend aus einem im Zündschlüssel integrierten passiven Datenträger in Form eines Transponders sowie einer vorzugsweise am Zündschloß angebrachten Antennenspule, die mit der Steuereinrichtung verbunden ist. Ein solches System wird in der Regel über den Zündkontakt des Fahrzeuges aktiviert, wodurch das Steuergerät ein magnetisches Wechselfeld aussendet. Dieses regt den Datenträger im Transponder zum Aussenden seiner fest abgespeicherten Dateninformation an. Die Tendenz geht bei modernen Zugangskontrolleinrichtungen allerdings zunehmend dahin, daß die Identifikationseinrichtungen bereits in einigem Abstand von der Steuereinrichtung angesprochen werden, ohne daß ein mechanisches Inverbindungtreten zwischen der Identifikationseinrichtung und der Steuereinrichtung notwendig ist.

Eine derartige Vorrichtung bzw. ein derartiges Verfahren zur Prüfung der Nutzungsberechtigung für Fahrzeuge ist das aus der Praxis bekannte sog. "Challenge-and-Response-Verfahren". Hierbei sendet die Steuereinrichtung zunächst an die Identifikationseinrichtung eine beliebige Dateninformation. Diese wird in der Identifikationseinrichtung mit einem geheimen Schlüssel unter Verwendung einer Verschlüsselungsfunktion verschlüsselt. Die verschlüsselte Information wird an die Steuereinrichtung zurückgesendet. Die Steuereinrichtung wendet nun auf die empfangene Nachricht die Inversfunktion zur Verschlüsselungsfunktion in Verbindung mit dem geheimen Schlüssel an. Die dadurch erzeugte Information wird in der Steuereinrichtung verglichen mit der ursprünglich erzeugten Ausgangsfunktion. Wenn eine Übereinstimmung vorliegt, wird die Nutzungsberechtigung als gegeben angesehen.

Eine Variante dieses Verfahrens ist in der EP 0 521 547 A1 beschrieben, die ein passives Diebstahlschutzsystem für Fahrzeuge beschreibt. Die Verschlüsselung der Dateninformation, die als Codewort begrenzten Codealphabets ausgebildet ist, geschieht hier durch eineindeutige Zuordnung eines Autorisierungs-Codeworts. Die Zuordnungsvorschrift zwischen den möglichen Codewörtern der Dateninformation und den zugehörigen Autorisierungs-Codewörtern in Form einer Tabelle ist sowohl an der Identifikationseinheit als auch der zentralen Steuereinheit bekannt.

Neben diesem aus der Praxis bekannten Stand der Technik ist aus der auf die Anmelderin zurückgehenden DE 195 23 009 A1 ein Verfahren bzw. eine Vorrichtung zur Prüfung der Nutzungsberechtigung für Zugangskontrolleinrichtungen bekannt, bei dem zunächst eine in der Steuereinrichtung erzeugte und von dort zur Identifikationseinrichtung übertragene unverschlüsselte Zahlenfolge und eine ebenfalls in der Steuereinrichtung aus der unverschlüsselten Zahlenfolge anhand eines geheimen Schlüssels erzeugte verschlüsselte Zahlenfolge an die Identifikationseinrichtung übertragen werden. Die Identifikationseinrichtung berechnet anschließend mit der in ihr gespeicherten inversen Verschlüsselungsfunktion aus der verschlüsselten Zahlenfolge eine dritte Zahlenfolge und vergleicht diese mit der übertragenen unverschlüsselten Zahlenfolge. Bei dem bekannten Verfahren wird bei Feststellung einer mangelnder Übereinstimmung der Zahlenfolgen die Berechtigungsprüfung abgebrochen. Wird hingegen eine Übereinstimmung festgestellt, so sendet die Identifikationseinrichtung anschließend eine weiter verschlüsselte Zahlenfolge aus, die in der Identifikationseinrichtung aus der verschlüsselten Zahlenfolge und dem gespeicherten geheimen Schlüssel erzeugt wird. Diese als Autorisierungssignal an die Steuereinrichtung übermittelte dritte Zahlenfolge wird von der Steuereinrichtung invers verschlüsselt und mit der aus der unverschlüsselten Zahlenfolge erzeugten verschlüsselten Zahlenfolge verglichen. Liefert dieser Vergleich eine Übereinstimmung der verglichenen Zahlenfolgen, so wird die Zugangskontrolleinrichtung freigegeben.

Problematisch ist bei den aus dem Stand der Technik bekannten Verfahren und Vorrichtungen zur Prüfung der Nutzungsberechtigung für Zugangskontrolleinrichtungen, bei denen die in Reichweite der Steuereinrichtung befindlichen Identifikationseinrichtungen automatisch zur Übertragung der Autorisierungssignale angesprochen werden, daß eine relativ große Wahrscheinlichkeit dafür besteht, daß gleichzeitig mehrere Identifikationseinrichtungen in die Reichweite der Steuereinrichtung gelangen. Diese Identifikationseinrichtungen werden nun von der Steuereinrichtung unabhängig davon, ob sie dem jeweiligen Schließsystem zuzuordnen sind, angesprochen. Hierbei kann es im wesentlichen zu zwei Arten von Störungen kommen. Zum einen können Identifikationseinrichtungen gleichzeitig angesprochen werden, die verschiedenen Schließsystemen zugeordnet sind. Dies tritt beispielsweise auf, wenn sich Fahrer und Beifahrer einem Kraftfahrzeug nähern, wobei der Fahrer eine zur Zugangskontrolleinrichtung des Kraftfahrzeuges zugehörige Identifikationseinrichtung bei sich trägt, während der Beifahrer eine zur Zugangskontrolleinrichtung eines anderen Kraftfahrzeuges zugehörige Identifikationseinrichtung bei sich trägt. Werden nun von der Steuereinrichtung beide Identifikationseinrichtungen angesprochen, so antworten beide Identifikationseinrichtungen mehr oder weniger gleichzeitig, wodurch es zu einer Überlagerung der von den Identifikationseinrichtungen ausgesandten Signale kommt, die durch die Kollision der elektromagnetischen Signale zu einer vollständigen Störung der Übertragung von Autorisierungssignalen führt. Diese Kollisionen treten auch bei den in der DE 195 23 009 A1 beschriebenen Verfahren auf, da hier die Identifikationseinrichtung bei Feststellung einer fehlenden Übereinstimmung zwischen der übertragenen verschlüsselten Zahlenfolge und der aus der übertragenen unverschlüsselten Zahlenfolge anhand des geheimen Schlüssels innerhalb der Identifikationseinrichtung erzeugten verschlüsselten Zahlenfolge ein Signal NACK(Not Acknowledged) und anschließend LW's (Listen windows) ausgesandt werden, um die Bereitschaft der Identifikationseinrichtung zur erneuten Autorisierung zu signalisieren. Zum anderen können Störungen der Autorisierung auch dann auftreten, wenn sich zwei Personen, insbesondere Fahrer und Beifahrer eines Kraftfahrzeugs, der Zugangskontrolleinrichtung nähern und beide Personen im Besitz einer Identifikationseinrichtung sind, die zur Freigabe der Zugangskontrolleinrichtung geeignet sind. Obwohl beide Identifikationseinrichtungen für sich eine Freigabe der Zugangskontrolleinrichtung ermöglichen, wird bei einer in etwa gleichzeitigen Annäherung der Identifikationseinrichtungen an die Steuereinrichtung aufgrund der im wesentlichen gleichzeitigen automatischen Ansprache der Identifikationseinrichtungen zur Übertragung der Autorisierungssignale diese Übertragung massiv gestört oder sogar unmöglich gemacht.
Im Ergebnis läßt sich in einem solchen Fall die Freigabe der Zugangskontrolleinrichtung nur dadurch gewährleisten, daß eine der Identifikationseinrichtungen aus dem Einflußbereich der Steuereinrichtung herausbewegt wird. Beide Arten von Störungen sind offensichtlich unerwünscht, da sie eine Freigabe der Zugangskontrolleinrichtung durch autorisierte Identifikationseinrichtungen verhindern.

Zur Auflösung derartiger Kollisionen schlägt die EP 0 709 803 A2 für ein Funksystem mit Datenkommunikation zwischen einer oder mehreren IC-Karten und einer Zentraleinheit vor, nach dem Auftreten einer Kollision aufgrund der annähernd gleichzeitigen Datenübertragung mehrerer IC-Karten die IC-Karten von der Zentraleinheit bedingt abzufragen. Die bedingte Abfrage geschieht dergestalt, daß Bitwerte der IC-Karten ID's abgefragt werden und bei Vorliegen des abgefragten Bitwertes eine IC-Karte sofort eine Antwort übermittelt, ansonsten eine Zeit T(ID) abwartet und dann eine Antwort übermittelt. Die kollisionsfreie Datenübertragung der IC-Karten geschieht hier jedoch erst nach bereits erfolgter Kollision, wodurch sich die Dauer der gesamten Datenübertragung erhöht.

Ausgehend von den Problemen mit den aus dem Stand der Technik bekannten Verfahren und Vorrichtungen zur Prüfung der Nutzungsberechtigung für Zugangskontrolleinrichtungen liegt der Erfindung die Aufgabe zugrunde, ein Verfahren und eine Vorrichtung zur Prüfung der Nutzungsberechtigung für Zugangskontrolleinrichtungen zur Verfügung zu stellen, mit dem bzw. der eine von vorneherein kollisionsfreie Übertragung der Autorisierungssignale auch bei gleichzeitiger Annäherung mehrerer Identifikationseinrichtungen an eine Steuereinrichtung gewährleistet ist.

Die zuvor hergeleitete und aufgezeigte Aufgabe wird gemäß einer ersten Lehre der Erfindung bei einem Verfahren zur Prüfung der Nutzungsberechtigung für Zugangskontrolleinrichtungen dadurch gelöst, daß von der Steuereinrichtung ein Selektionssignal ausgesendet wird und daß von einer Identifikationseinrichtung nach dem Empfang eines ausschließlich dieser Identifikationseinrichtung zuzuordnenden Selektionssignals das Autorisierungssignal ausgesendet wird. Durch diese Maßnahmen gemäß der ersten Lehre der Erfindung ist also gewährleistet, daß die Identifikationseinrichtung nur dann ein Autorisierungssignal aussendet, wenn sie eindeutig angesprochen ist. Entsprechend können also keine gegenseitigen Störungen der Autorisierungssignale gemäß der ersten Lehre der Erfindung ausgestalteter Identifikationseinrichtungen mehr auftreten. Bei dem nach der ersten Lehre der Erfindung ausgestalteten Verfahren werden selbstverständlich auch verschiedenen Identifikationseinrichtungen, die ein und derselben Zugangskontrolleinrichtung zugeordnet sind, verschiedene Selektionssignale zugeordnet. Die nach der ersten Lehre der Erfindung vorgesehene Ausschließlichkeit bzw. Eindeutigkeit der Zuordnung des Selektionssignals bewegt sich in dem für Zugangskontrolleinrichtungen üblichen Rahmen.

Eine besonders vorteilhafte Ausgestaltung erfährt die erste Lehre der Erfindung dadurch, daß die Autorisierungssignale und Dateninformationen zwischen der Steuereinrichtung und den Identifikationseinrichtungen übertragen werden, und daß die von der Steuereinrichtung ausgesandten Dateninformationen einen Teil des Selektionssignals bilden. Der zusätzliche Aufwand für die Auswahl eines nur einer Identifikationseinrichtung zugeordneten Selektionssignals läßt sich durch die soeben beschriebene Maßnahme entscheidend reduzieren. Bei einem nach der beschriebenen Ausgestaltung arbeitenden Verfahren wird bei Verfahren zur Prüfung der Nutzungsberechtigung für Zugangskontrolleinrichtungen, die nach dem "Challenge-and-Response-Verfahren" arbeiten, die von der Steuereinrichtung an die Identifikationseinrichtung übertragene Dateninformation gleichzeitig zur Übertragung eines Teils des Selektionssignals genutzt.

Die beschriebene Ausgestaltung eines Verfahrens nach der ersten Lehre der Erfindung läßt sich besonders vorteilhaft mit dem aus der DE 195 23 009 A1 bekannten Verfahren dadurch verknüpfen, daß in der Steuereinrichtung eine Zahlenfolgen und aus der Zahlenfolge eine verschlüsselte Zahlenfolge erzeugt wird, daß die Zahlenfolge und die verschlüsselte Zahlenfolge als Dateninformation an die Identifikationseinrichtung übertragen wird, daß in der Identifikationseinrichtung die verschlüsselte Zahlenfolge invers verschlüsselt und mit der Zahlenfolge verglichen wird und daß aus der Übereinstimmung der verglichenen Zahlenfolgen zumindest ein Teil des Selektionssignals abgeleitet wird. Nach dieser Ausgestaltung läßt sich also die bekannte Übertragung einer unverschlüsselten und einer verschlüsselten Zahlenfolge von der Steuereinrichtung an eine Identifikationseinrichtung, die ursprünglich zur Verbesserung der Sicherheit der Nutzungsberechtigungsprüfung vorgesehen war, gleichzeitig zur Selektion der in der Reichweite der Steuereinrichtung befindlichen Identifikationseinrichtungen verwenden. Bei dieser Ausgestaltung lassen sich Störungen selbstverständlich nur vermeiden, wenn im Unterschied zum Stand der Technik darauf verzichtet wird, daß die Identifikationseinrichtung bei mangelnder Übereinstimmung der zu vergleichenden Zahlenfolgen kein NACK und keine LW's aussendet, die wiederum zu Kollisionen in der Datenübertragung führen würden. Die angesprochenen Identifikationseinrichtungen, bei denen der Vergleich keine Übereinstimmung ergibt, schweigen im Anschluß an den Vergleich.

Bei der Vervollständigung des Verfahrens zur Prüfung der Nutzungsberechtigung für Zugangskontrolleinrichtungen gemäß der ersten Lehre der Erfindung ist es des weiteren vorteilhaft, daß das nach Feststellung der Übereinstimmung der verglichenen Zahlenfolgen von der Identifikationseinrichtung an die Steuereinrichtung übertragene Autorisierungssignal aus der Zahlenfolge oder der verschlüsselten Zahlenfolge durch weitere Verschlüsselung erzeugt wird und daß bei Übereinstimmung des in der Steuereinrichtung invers verschlüsselten Autorisierungssignals der Identifikationseinrichtung mit der Zahlenfolge oder der verschlüsselten Zahlenfolge die Zugangskontrolleinrichtung freigegeben wird. Diese Maßnahme ermöglicht die Verwirklichung des in der DE 195 23 009 A1 beschriebenen Verfahrens bei gleichzeitiger teilweiser oder vollständiger Selektion der Identifikationseinrichtungen.

Um mit den bislang beschriebenen Maßnahmen eine vollständige Selektion der Identifikationseinrichtungen zu gewährleisten, sind für verschiedene, einer Zugangskontrolleinrichtung zugeordnete Identifikationseinrichtungen verschiedene geheime Schlüssel erforderlich. Dies ist zum einen aufwendig und zum anderen hinsichtlich der Erweiterung auf weitere der Zugangskontrolleinrichtung zugeordnete Identifikationseinrichtungen problematisch, da für jede Zugangskontrolleinrichtung eine gewisse Anzahl von geheimen Schlüsseln vorzuhalten wäre. Diese Problematik läßt sich dadurch vermeiden, daß gemäß einer weiteren Ausgestaltung der ersten Lehre der Erfindung zumindest ein Teil des Selektionssignals als eine einer Identifikationseinrichtung zugeordnete Zahlenfolge übertragen wird. Es ist nun zum einen möglich, jeder Identifikationseinrichtung, unabhängig davon, welcher Zugangskontrolleinrichtung sie zugeordnet ist, eine einmalige Zahlenfolge zuzuordnen. Besonders vorteilhaft ist jedoch die Verknüpfung der teilweisen Ableitung des Selektionssignals aus der Dateninformation mit einer Ergänzung des Selektionssignals durch eine Zuordnung einer einmaligen Zahlenfolge zu jeder einer gemeinsamen Zugangskontrolleinrichtung zugeordneten Identifikationseinrichtung. Eine derartige Aufteilung des Selektionssignals auf die Dateninformation und eine uncodiert übertragbare Zahlenfolge ergibt eine besonders vorteilhafte Möglichkeit einer eindeutigen Selektion von Identifikationseinrichtungen.

Für eine Vorrichtung zur Prüfung der Nutzungsberechtigung für Zugangskontrolleinrichtungen ist die oben hergeleitete und aufgezeigte Aufgabe nach einer zweiten Lehre der Erfindung dadurch gelöst, daß die Steuereinrichtung ein Selektionssignal aussendet und daß eine Identifikationseinrichtung das Autorisierungssignal nach dem Empfang eines ausschließlich dieser Identifikationseinrichtung zuzuordnenden Selektionssignals aussendet.

Eine Vorrichtung zur Prüfung der Nutzungsberechtigung für Zugangskontrolleinrichtungen gemäß der zweiten Lehre der Erfindung eignet sich neben ihrem möglichen Einsatz in stationären Zugangskontrolleinrichtungen, beispielsweise in Zugangsbereichen großer Firmen, besonders vorteilhaft zum Einsatz in Verbindung mit mobilen Zugangskontrolleinrichtungen, wobei die Identifikationseinrichtung einen insbesondere als Transponder ausgebildeten Teil eines Fahrzeugschlüssels bildet.

Es besteht nun eine Vielzahl von Möglichkeiten, das erfindungsgemäße Verfahren bzw. die erfindungsgemäße Vorrichtung zur Prüfung der Nutzungsberechtigung für Zugangskontrolleinrichtungen auszugestalten und weiterzubilden. Dazu wird einerseits auf die den Patentansprüchen 1 und 6 nachgeordneten Patentansprüche sowie andererseits auf die Beschreibung eines bevorzugten Ausführungsbeispiels in Verbindung mit der Zeichnung verwiesen. In der Zeichnung zeigen
- Fig. 1: ein Funktionsschema eines bekannten Verfahrens zur Prüfung der Nutzungsberechtigung für Zugangskontrolleinrichtungen und
- Fig. 2: schematisch ein Ausführungsbeispiel eines erfindungsgemäßen Verfahrens zur Prüfung der Nutzungsberechtigung für Zugangskontrolleinrichtungen.

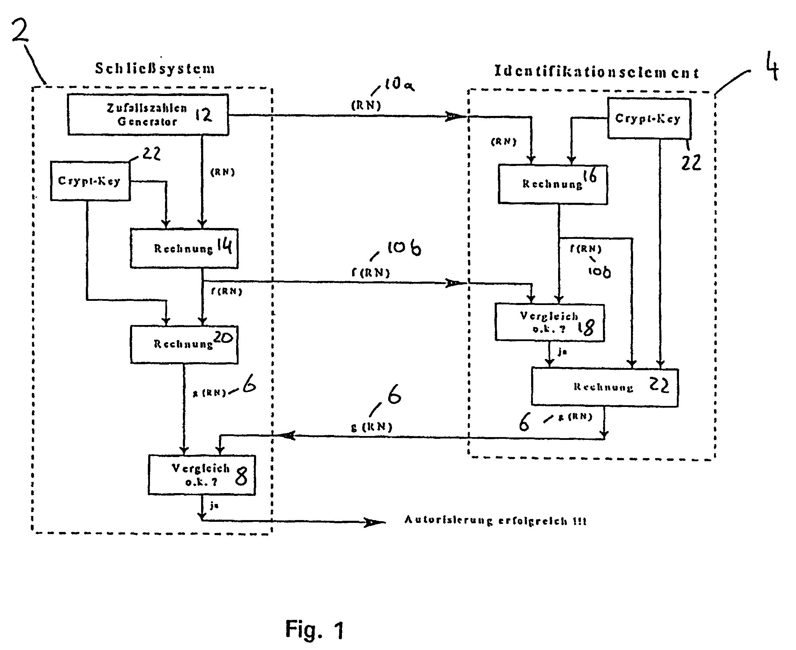

Bei dem in Fig. 1 dargestellten bekannten Verfahren zur Prüfung der Nutzungsberechtigung für Zugangskontrolleinrichtungen sendet die als Schließsystem ausgebildete Steuereinrichtung einen Aktivierungsbefehl, der eine Zufallszahl (RN) und das durch Verschlüsselung der Zufallszahl mit Hilfe des geheimen Schlüssels Crypt-key errechnete Crypt-Zwischenergebnis f (RN) enthält. Das Identifikationselement errechnet seinerseits aus der Zufallszahl (RN) und seinem Crypt-key ein Crypt-Zwischenergebnis f (RN), welches es mit dem Zwischenergebnis des Schließsystems vergleicht. Sind beide Crypt-keys und Rechenoperationen gleich, ergeben sich auch gleiche Zwischenergebnisse. In diesem Fall errechnet das Identifikationselement das Endergebenis g(RN) aus dem Zwischenergebnis f (RN) und der Anwendung des Crypt-keys und sendet es zurück zum Schließsystem, welches seinerseits ebenfalls aus f (RN) und seinem Crypt-key ein g (RN) errechnet hat.

Sind beide g (RN) gleich, ist die Autorisierung erfolgreich abgeschlossen. Sollte der Vergleich des Zwischen- oder Endergebnisses bei dem bekannten Verfahren zur Prüfung der Nutzungsberechtigung für Zugangskontrolleinrichtungen ein negatives Ergebnis liefern, so wird der Autorisierungsvorgang abgebrochen, und das Identifikationselement sendet ein NACK (Not-Acknowledged) und anschließend LW's (Listen Windows), um seine Bereitschaft zur erneuten Autorisierung zu signalisieren.

Bei dem aus dem Stand der Technik bekannten Verfahren zur Prüfung der Nutzungsberechtigung für Zugangskontrolleinrichtungen würden diese im Fehlerfall gesendeten Daten mit einem sich ebenfalls in Reichweite des Schließsystems befindenden Identifikationselement, welches gerade ein Endergebnis g(RN) sendet, kollidieren. Ebenso kollidieren die Daten von zwei oder mehr Identifikationselementen, wenn sie gleichzeitig die Endergebnisse g(RN) oder NACK's und LW's zurücksenden. Die Ursache für diese möglichen Kollisionen liegt in der autarken und unsynchronisierten Arbeitsweise jedes einzelnen Identifikationselementes, die erfindungsgemäß verändert wird.

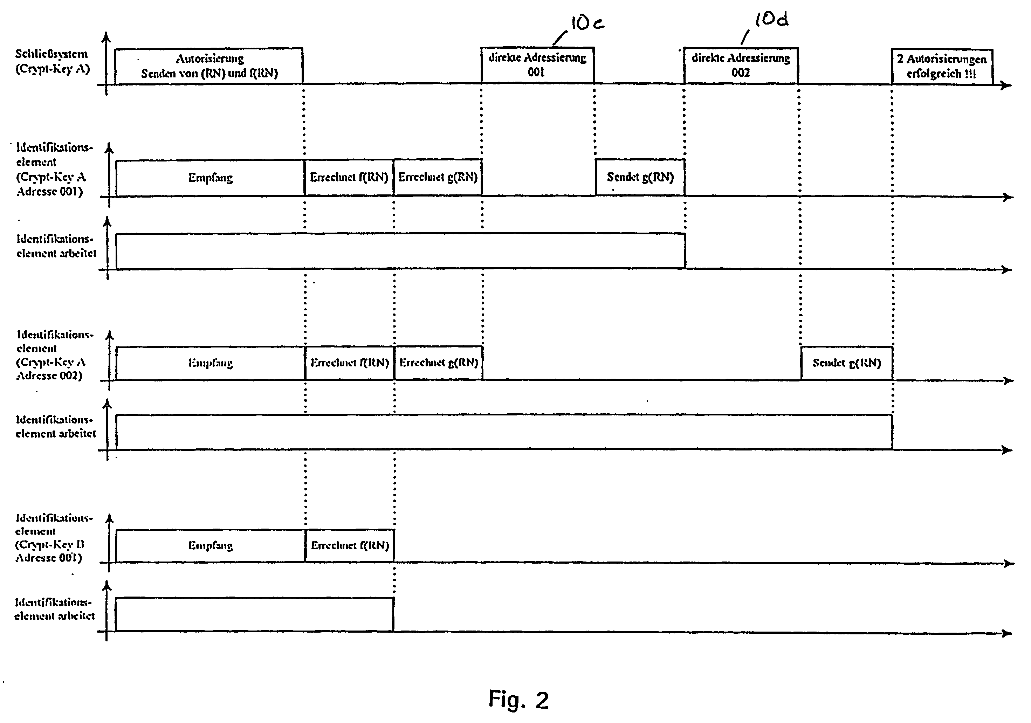

Das in Fig. 2 dargestellte Ausführungsbeispiels des erfindungsgemäßen Verfahrens zur Prüfung der Nutzungsberechtigung für Zugangskontrolleinrichtungen arbeitet prinzipiell nach dem in Fig. 1 dargestellten Ablaufschema. Im obersten Diagramm in Fig. 2 sind die Aktionen eines nach dem erfindungsgemäßen Verfahren arbeitenden Schließsystems dargestellt. In den in Fig. 2 dargestellten 2., 3. und 4. Diagrammpaaren sind die Aktionen von erfindungsgemäß arbeitenden Identifikationselementen, wie im obersten Diagramm auf der Zeitachse, dargestellt.

Bei dem in Fig. 2 dargestellten Ausführungsbeispiel eines erfindungsgemäßen Verfahrens sendet das Schließsystem eineDateninformation, die eine Zufallszahl (RN) und ein Crypt-Zwischenergebnis f(RN) beinhaltet. Dieses Signal können praktisch alle Identifikationselemente, die sich in der Reichweite des Schließsystems befinden, empfangen und errechnen ihrerseits aus der Zufallszahl (RN) und ihren Crypt-keys ein f(RN). Besitzen nun das Schließsystem und das Identifikationselement den gleichen Crypt-key und gleiche Rechenoperationen, stimmen auch beide f(RN) überein. Dies bedeutet, daß das Identifikationselement mit dem gleichen f(RN) zu dem Schließsystem, welches die Dateninformation gesendet hat, gehört. Die in der zweiten und dritten Diagrammgruppe beschriebenen Identifikationselemente haben also den ersten Teil des Selektionssignals empfangen, der ihnen signalisiert, daß sie weiter aktiv bleiben sollen. Das in der vierten Diagrammgruppe dargestellte Identifikationselement, bei dem das Zwischenergebnis f (RN) nicht übereinstimmt, schaltet sich erfindungsgemäß, ohne Abgabe von NACK's und LW's ab, da es anhand des ersten Teils des Selektionssignals, das vorliegend von der Dateninformation gebildet wird, erkannt hat, daß es nicht von dem Schließsystem angesprochen wird.

Die Endergebnisse g (RN) werden von den noch aktiven Identifikationselementen, bei denen der erste Teil des Selektionssignals als ihnen zugeordnet bewertet worden ist, erst gesendet, wenn sie mit ihrer ergänzenden Identifikationselement-Adresse 001 oder 002 direkt angesprochen werden. Durch die Sendung der Endergebnisse g (RN) werden schließlich die Autorisierungen ohne Kollisionen abgeschlossen und die Zugangskontrolleinrichtung freigegeben.

Durch den oben beschriebenen Vorgang wird bereits während der Aktivierung eine Selektion der sich in Reichweite des Schließsystems befindlichen Identifikationselemente vorgenommen, so daß bei der abschließenden Selektion immer nur die zum Schließsystem gehörenden Identifikationselemente, deren Selektionsadresse bekannt und auch nur einmal innerhalb eines Schließsystems vorkommt, antworten. Die Dateninformation vermeidet somit als Teil des Selektionssignals Kollisionen mit Identifikationselementen fremder Schließsysteme und die abschließende Selektion durch direkte Adressierung der einem Schließelement zugeordneten Identifikationselemente vermeidet die Kollisionen von einem Schließsystem zugeordneten Identifikationselementen untereinander.

## Patentansprüche

1. Verfahren zur Prüfung der Nutzungsberechtigung für Zugangskontrolleinrichtungen, insbesondere für Schließeinrichtungen von Fahrzeugen, mit Hilfe einer zugangsseitigen Steuereinrichtung (2) und mit Hilfe mindestens einer benutzerseitigen Identifikationseinrichtung (4), bei welchem zwischen der Steuereinrichung (2) und einer Identifikationseinrichtung (4) Autorisierungssignale (6) ausgetauscht und verglichen werden und bei welchem die in Reichweite der Steuereinrichtung (2) befindlichen Identifikationseinrichtungen (4) automatisch zur Übertragung der Autorisierungssignale (6) angesprochen werden,
**dadurch gekennzeichnet, daß** von der Steuereinrichtung (2) ein Selektionssignal (10) ausgesandt wird, und daß von einer Identifikationseinrichtung (4) nach dem Empfang eines ausschließlich dieser Identifikationseinrichtung (4) zuzuordnenden Selektionssignals (10c) das Autorisierungssignal (6) ausgesendet wird.

2. Verfahren nach Anspruch 1,
**dadurch gekennzeichnet, daß** die Autorisierungssignale und Dateninformationen (10a, 10b) zwischen der Steuereinrichtung (2) und den Identifikationseinrichtungen (4) übertragen werden und daß die von der Steuereinrichtung (2) ausgesandten Dateninformationen (10a, 10b) einen Teil des Selektionssignals (10) bilden.

3. Verfahren nach Anspruch 2,
**dadurch gekennzeichnet, daß** in der Steuereinrichtung (2) eine Zahlenfolge (10a) und aus der Zahlenfolge (10a) eine verschlüsselte Zahlenfolge (10b) erzeugt wird (12, 14), daß die Zahlenfolge (10a) und die verschlüsselte Zahlenfolge (10b) als Dateninformation (10a, 10b) an die Identifikationseinrichtung (4) übertragen wird, daß in der Identifikationseinrichtung (4) die verschlüsselte Zahlenfolge (10b) invers oder mit der gleichen Funktion verschlüsselt (16) und mit der Zahlenfolge (10b) verglichen (18) wird, und daß aus der Übereinstimmung der verglichenen Zahlenfolgen (10b) zumindest ein Teil des Selektionssignals (10) abgeleitet wird.

4. Verfahren nach Anspruch 3,
**dadurch gekennzeichnet, daß** das nach Feststellen der Übereinstimmung (18) der verglichenen Zahlenfolgen von der Identifikationseinrichtung (4) an die Steuereinrichtung (2) übertragene Autorisierungssignal (6) aus der Zahlenfolge (10a) oder der verschlüsselten Zahlenfolge (10b) durch weitere Verschlüsselung (22) erzeugt wird und daß bei Übereinstimmung (8) des in der Steuereinrichtung (2) invers oder mit der gleichen Funktion verschlüsselten Autorisierungssignals (6) der Identifika-tionseinrichtung mit der Zahlenfolge (10a) oder der verschlüsselten Zahlenfolge (10b) die Zugangskontrolleinrichtung freigegeben wird (8).

5. Verfahren nach einem der Ansprüche 1 bis 4,
**dadurch gekennzeichnet, daß** zumindest ein Teil des Selektionssignals (10) als eine einer Identifikationseinrichtung zugeordneten Zahlenfolge (10c) übertragen wird.

6. Vorrichtung zur Prüfung der Nutzungsberechtigung für Zugangskontrolleinrichtungen, insbesondere für Schließeinrichtungen von Fahrzeugen, mit einer zugangsseitigen Steuereinrichtung und mit mindestens einer benutzerseitigen Identifikationseinrichtung, wobei zwischen der Steuereinrichtung und einer Identifikationseinrichtung Autorisierungssignale austauschbar sind, wobei die Steuereinrichtung geeignet ist, die Autorisierungssignale (6) zu vergleichen (8), und wobei die in Reichweite der Steuereinrichtung (2) befindlichen Identifikationseinrichtungen (4) automatisch zur Übertragung der Autorisierungssignale (6) ansprechbar sind, insbesondere zur Verwirklichung eines Verfahrens nach einem der Ansprüche 1 bis 5,
**dadurch gekennzeichnet, daß** die Steuereinrichtung (2) ein Selektionssignal (10) aussendet und daß eine Identifikationseinrichtung (4) das Autorisierungssignal (6) nach dem Empfang eines ausschließlich dieser Identifikationseinrichtung (10c) zuzuordnenden Selektionssignals (10) aussendet.

7. Vorrichtung nach Anspruch 6,
**dadurch gekennzeichnet, daß** die Identifikationseinrichtung (4) ein insbesondere als Transponder ausgebildeter Teil eines Fahrzeugschlüssels ist.

## Claims

1. Process for testing use authorisation for access-control devices, in particular for closing devices of vehicles, with the aid of an access-side control device (2) and with the aid of at least one user-side identification device (4), in which authorisation signals (6) are exchanged and compared between the control device (2) and an identification device (4) and in which the identification devices (4) situated in range of the control device (2) are addressed automatically to transfer the authorisation signals (6), **characterised in that** a selection signal (10) is emitted by the control device (2), and **in that** the authorisation signal (6) is emitted by an identification device (4) after receiving a selection signal (10c) to be assigned exclusively to this identification device (4).

2. Process according to claim 1, **characterised in that** the authorisation signals and data information (10a, 10b) are transferred between the control device (2) and the identification devices (4) and **in that** the data information (10a, 10b emitted by the control device (2) forms a part of the selection signal (10).

3. Process according to claim 2, **characterised in that** in the control device (2) a number sequence (10a) and from the number sequence (10a) a coded number sequence (10b) is produced (12, 14), **in that** the number sequence (10a) and the coded number sequence (10b) is transferred as data information (10a, 10b) to the identification device (4), **in that** in the identification device (4), the coded number sequence (10b) is coded (16) inversely or with the same function and compared (18) with the number sequence (10b), and **in that** at least a part of the selection signal (10) is derived from the agreement of the compared number sequences (10b).

4. Process according to claim 3, **characterised in that** the authorisation signal (6) transferred from the identification device (4) to the control device (2), after establishing agreement (18) of the compared number sequences, is produced from the number sequence (10a) or the coded number sequence (10b) by further coding (22) and **in that** in the event of agreement (8) of the authorisation signal (6) of the identification device coded inversely or with the same function in the control device (2) with the number sequence (10a) or the coded number sequence (10b), the access-control device is released (8).

5. Process according to one of claims 1 to 4, **characterised in that** at least one part of the selection signal (10) is transferred as a number sequence (10c) assigned to an identification device.

6. Device for testing use authorisation for access-control devices, in particular for closing devices of vehicles, having an access-side control device and having at least one user-side identification device, wherein authorisation signals can be exchanged between the control device and an identification device, wherein the control device is suitable for comparing (8) the authorisation signals (6), and wherein the identification devices (4) situated in range of the control device (2) can be addressed automatically to transfer authorisation signals (6), in particular to realise a process according to one of claims 1 to 5, **characterised in that** the control device (2) emits a selection signal (10) and **in that** an identification device (4) emits the authorisation signal (6) after receiving a selection signal (10) to be assigned exclusively to this identification device (10c).

7. Device according to claim 6, **characterised in that** the identification device (4) is a part of a vehicle key designed in particular as a transponder.

## Revendications

1. Procédé pour vérifier le droit d'usage de dispositifs de contrôle d'accès, notamment pour les dispositifs de fermeture de voitures, au moyen d'un dispositif de commande (2) côté accès et d'un dispositif d'identification (4) au moins, côté utilisateur, avec lequel des signaux d'autorisation (6) sont échangés et comparés entre le dispositif de commande (2) et un dispositif d'identification (4), et avec lequel les dispositifs d'identification (2) se trouvant dans le rayon d'action du dispositif de commande (2) sont adressés automatiquement en vue de la transmission des signaux d'autorisation (6),
**caractérisé en ce qu'**un signal de sélection (10) est émis par le dispositif de commande (2) et que le signal d'autorisation (6) est émis par un dispositif d'identification (4), suite à la réception d'un signal de sélection (10c) à affecter exclusivement à ce dispositif d'identification (4).

2. Procédé selon la revendication 1, **caractérisé en ce que** les signaux d'autorisation et des informations sous forme de données (10a, 10b) sont transmises entre le dispositif de commande (2) et les dispositifs d'identification (4) et que par ailleurs les informations sous forme de données (10a, 10b) émises par le dispositif de commande (2) forment une partie du signal de sélection (10).

3. Procédé selon la revendication 2, **caractérisé en ce qu'**une suite numérique (10a) est générée dans le dispositif de commande (2) et qu'à partir de la suite numérique (10a est générée (12, 14) une suite numérique codée (10b), que la suite numérique (10a) et la suite numérique codée (10b) sont transmises sous forme de données (10a, 10b) au dispositif d'identification (4), que la suite numérique codée (10b) dans le dispositif d'identification (4) est codée (16) de manière inverse ou avec la même fonction et comparée (18) à la suite numérique (10b), et que l'on peut déduire de la concordance des suites numériques (10b) comparées une partie au moins du signal de sélection (10).

4. Procédé selon la revendication 3, **caractérisé en ce que** le signal d'autorisation (6) transmis par le dispositif d'identification (4) au dispositif de commande (2), suite à la constatation de la concordance (18) des suites numériques comparées, est généré au moyen d'un codage supplémentaire (22) à partir de la suite numérique (10a) ou de la suite numérique codée (10b) et que s'il y concordance (8) du signal d'autorisation (6) du dispositif d'identification codé dans le dispositif de commande (2) de manière inverse ou avec la même fonction, d'une part, avec la suite numérique (10a) ou la suite numérique codée (10b), d'autre part, l'équipement de contrôle d'accès (8) sera validé.

5. Procédé selon l'une quelconque des revendications de 1 à 4, **caractérisé en ce qu'**une partie au moins du signal de sélection (10) est transmise comme suite numérique (10c) affectée à un dispositif d'identification.

6. Dispositif pour vérifier le droit d'usage de dispositifs de contrôle d'accès, notamment pour les dispositifs de fermeture de voitures, au moyen d'un dispositif de commande côté accès et d'un dispositif d'identification au moins, côté utilisateur, avec lequel des signaux d'autorisation peuvent être échangés entre le dispositif de commande et un dispositif d'identification, le dispositif de commande étant en mesure de comparer (8) les signaux d'autorisation (6), les dispositifs d'identification (4) se trouvant dans le rayon d'action du dispositif de commande (2) étant automatiquement adressés en vue de la transmission des signaux d'autorisation (6), notamment en vue de la réalisation d'un procédé selon l'une quelconque des revendications 1 à 5, **caractérisé en ce qu'**un signal de sélection (10) est émis par le dispositif de commande (2) et que le signal d'autorisation (6) est émis par un dispositif d'identification (4), suite à la réception d'un signal de sélection (10) à affecter exclusivement à ce dispositif d'identification (10c).

7. Dispositif selon la revendication 6, **caractérisé en ce que** le dispositif d'identification (4) consiste en un élément d'une clé de voiture, notamment développé comme transpondeur
